# EUROPÄISCHE PATENTSCHRIFT

(11) **EP 4 244 577 B1**
(45) Veröffentlichungstag und Bekanntmachung des Hinweises auf die Patenterteilung: **25.06.2025**
(21) Anmeldenummer: 21810556.7
(22) Anmeldetag: 09.11.2021
(51) Int. Cl.: G01B 21/04

(54) **MESSKÖRPER ZUR ÜBERPRÜFUNG VON GEOMETRISCHEN ABWEICHUNGEN EINER 3-ACHSIGEN WERKZEUGMASCHINE, 3-ACHSIGE WERKZEUGMASCHINE UND VERFAHREN ZUR KOMPENSATION GEOMETRISCHER ABWEICHUNGEN EINER 3-ACHSIGEN WERKZEUGMASCHINE**
MEASURING BODY FOR VERIFYING GEOMETRICAL DEVIATIONS OF A 3-AXIS MACHINE TOOL, 3-AXIS MACHINE TOOL, AND METHOD FOR COMPENSATING GEOMETRICAL DEVIATIONS OF A 3-AXIS MACHINE TOOL
CORPS DE MESURE POUR LA VÉRIFICATION D'ÉCARTS GÉOMÉTRIQUES D'UNE MACHINE-OUTIL À 3 AXES, MACHINE-OUTIL À TROIS AXES ET PROCÉDÉ DE COMPENSATION D'ÉCARTS GÉOMÉTRIQUES D'UNE MACHINE-OUTIL À 3 AXES

(30) Priorität: 16.11.2020 DE 102020130193
(43) Veröffentlichungstag der Anmeldung: 20.09.2023
(73) Patentinhaber: Röders GmbH, 29614 Soltau (DE)
(72) Erfinder: BREITZKE, André, 29640 Schneverdingen (DE)
(74) Vertreter: Hoefer & Partner Patentanwälte mbB
(86) Internationale Anmeldenummer: PCT/EP2021/081108
(87) Internationale Veröffentlichungsnummer: WO 2022/101197

(56) Entgegenhaltungen:
- DE-A1- 19 507 806
- DE-U1- 202017 106 555
- VIPREY F ET AL: "Novel multi-feature bar design for machine tools geometric errors identification", PRECISION ENGINEERING, ELSEVIER, AMSTERDAM, NL, vol. 46, 18 June 2016 (2016-06-18), pages 323 - 338, XP029659309, ISSN: 0141-6359, DOI: 10.1016/J.PRECISIONENG.2016.06.002

## Beschreibung

Die vorliegende Erfindung betrifft einen Messkörper zur Überprüfung von geometrischen Abweichungen einer 3-achsigen Werkzeugmaschine sowie eine 3-achsige Werkzeugmaschine mit einer verbesserten geometrischen Genauigkeit sowie ein Verfahren zur Überprüfung und Kompensation von geometrischen Abweichungen einer 3-achsigen Werkzeugmaschine.

Ein bekannter Problemkreis bei Werkzeugmaschinen ist die geometrische Genauigkeit der Werkzeugmaschine. Die geometrische Genauigkeit einer Werkzeugmaschine wird durch die relative Abweichung der Ist-Position und -Orientierung des Werkzeugs zum Werkstück von der Soll-Position und -Orientierung bestimmt. Dieser Fehler ist damit ursächlich für Abweichungen von der idealen Werkstückgeometrie und damit für die Arbeitsgenauigkeit einer Werkzeugmaschine. Zur Verbesserung der geometrischen Genauigkeit werden in der Regel Einzelachsabweichungen sowie die Lage- und Ausrichtung der Einzelachsen zueinander betrachtet.

Unter Annahme eines Starrkörpermodells weist eine 3-achsige Werkzeugmaschine dabei jeweils drei lineare Abweichungen (einmal in Achsrichtung und zweimal senkrecht zur Achsrichtung) sowie drei rotatorische Abweichungen (Gieren, Nicken und Rollen) auf. Somit ergeben sich für jede Linearachse sechs Abweichungen, sodass sich für die drei Linearachsen 18 Abweichungen ergeben. Zusätzlich müssen noch drei Rechtwinkligkeitsabweichungen der Linearachsen zueinander betrachtet werden. Somit weist eine 3-achsige Werkzeugmaschine insgesamt 21 mögliche Fehler in der Geometrie auf. Hierbei können sich die einzelnen Abweichungen überlagern und dann tatsächlich zu einem großen Gesamtfehler führen, was die geometrische Genauigkeit der Werkzeugmaschine in unerwünschter Weise beeinflusst.

Die DE 19 507 806 A1 beschreibt einen Prüfkörper zur Prüfung von Koordinatenmessgeräten und Werkzeugmaschinen, bestehend aus einer Platte mit einem unvollständigen Raster von Antastelementen, welche dadurch gekennzeichnet ist, dass das Raster lediglich aus zueinander eng benachbarten Zeilen (X-Richtung) und zueinander eng benachbarten Spalten (Y-Richtung) besteht.

Es ist Aufgabe der vorliegenden Erfindung, einen Messkörper zur Überprüfung von geometrischen Abweichungen einer 3-achsigen Werkzeugmaschine, eine 3-achsige Werkzeugmaschine und ein Verfahren zur Überprüfung und Kompensation von geometrischen Abweichungen einer 3-achsigen Werkzeugmaschine bereitzustellen, wobei der Messkörper und die 3-achsige Werkzeugmaschine möglichst einfach und kostengünstig aufgebaut sind und das Verfahren möglichst kostengünstig und schnell durchführbar ist.

Diese Aufgabe wird durch einen Messkörper mit den Merkmalen des Anspruchs 1, eine 3-achsige Werkzeugmaschine mit den Merkmalen des Anspruchs 9 und ein Verfahren mit den Merkmalen des Anspruchs 11 gelöst. Die Unteransprüche zeigen jeweils bevorzugte Weiterbildungen der Erfindung.

Der erfindungsgemäße Messkörper zur Überprüfung von geometrischen Abweichungen einer 3-achsigen Werkzeugmaschine mit den Merkmalen des Anspruchs 1 weist hingegen den Vorteil auf, dass mit Hilfe des Messkörpers geometrische Abweichungen der 3-achsigen Werkzeugmaschine ausgeglichen werden können, sodass die 3-achsige Werkzeugmaschine keine linearen Abweichungen und keine Rechtwinkligkeitsabweichungen aufweist. Somit können anschließend Werkstücke mittels der 3-achsigen Werkzeugmaschine mit höchster Genauigkeit bearbeitet werden. Dabei können die anhand des Messkörpers bestimmten Korrekturdaten direkt für eine Fehlerkompensation der 3-achsigen Werkzeugmaschine verwendet werden. Dies wird erfindungsgemäß dadurch erreicht, dass der Messkörper eine viereckige Basisplatte, eine erste Wand und eine zweite Wand aufweist. Die erste Wand ist an der Basisplatte angeordnet und steht senkrecht von der Basisplatte vor. Die zweite Wand ist ebenfalls senkrecht vorstehend an der Basisplatte angeordnet. Hierbei ist in der Basisplatte eine erste Lochreihe und eine zweite Lochreihe ausgebildet. Ferner ist die erste Wand treppenstufenförmig mit einer Vielzahl von Stufen an der von der Basisplatte abgewandten Seite ausgebildet. In gleicher Weise ist auch die zweite Wand treppenstufenförmig mit einer Vielzahl von Stufen an der von der Basisplatte abgewandten Seite ausgebildet. Der treppenstufenförmige Bereich der ersten und zweiten Wand liegt somit jeweils an dem oberen, freiliegenden Bereich der ersten und zweiten Wand. Somit bildet der obere, freiliegende Bereich der ersten und zweiten Wand eine Treppe, an welcher unterschiedliche Positionen in Z-Richtung erfasst werden können, wobei die Basisplatte eine Grundebene in X- und Y-Richtung aufspannt. Durch den oberen, freiliegenden treppenstufenförmigen Bereich der ersten und zweiten Wand weisen die erste und zweite Wand im Wesentlichen eine dreieckige Form auf.

Die erste Wand ist entlang eines ersten Randes der Basisplatte angeordnet und die zweite Wand ist entlang eines zweiten Randes der Basisplatte angeordnet. Ferner ist die erste Lochreihe entlang eines dritten Randes der Basisplatte angeordnet und die zweite Lochreihe ist entlang eines vierten Randes der Basisplatte angeordnet. Somit weist die viereckige, vorzugsweise quadratische, Basisplatte an zwei Rändern die erste und zweite Wand auf und an den zwei anderen Rändern die erste und zweite Lochreihe auf.

Die erste und zweite Wand sind derart angeordnet, dass diese an einer Ecke der Basisplatte aneinandergrenzen beziehungsweise einen Eckbereich ausbilden. Dabei können die erste und zweite Wand auf der Basisplatte angeordnet sein oder alternativ sind die erste und zweite Wand an seitlichen Bereichen der Basisplatte angeordnet und die Ecke der Basisplatte liegt in einer Ecklinie der sich berührenden ersten und zweiten Wand.

Dabei weist jede Stufe des Messkörpers ein Referenzloch auf.

Für eine einfache Herstellbarkeit des Messkörpers sind die erste Wand und die zweite Wand bevorzugt identisch ausgebildet. Weiter bevorzugt weist jede Stufenfläche des treppenförmigen Bereichs jeder Wand ein Referenzloch auf. Das Referenzloch ist vorzugsweise mittig in der Stufenfläche ausgebildet. Weiter bevorzugt ist jede Stufenfläche geschliffen oder gefräst. Die Referenzlöcher sind vorzugsweise Bohrungen. Dadurch ist es möglich, dass die Bohrung und die geschliffene Fläche jeweils als Referenzelement hergenommen werden können, wobei die geschliffene Fläche der Stufe zur Bestimmung der Z-Koordinate herangezogen wird und ein Mittelpunkt einer Bohrung als X- und Y-Koordinate herangezogen wird.

Weiter bevorzugt ist neben der ersten Lochreihe eine erste Referenzfläche auf der Basisplatte ausgebildet und neben der zweiten Lochreihe ist eine zweite Referenzfläche an der Basisplatte ausgebildet. Die beiden Referenzflächen sind, somit ebenfalls Referenzelemente und jeweils zur Bestimmung von Z-Koordinaten eingerichtet.

Um den Vermessungsvorgang möglichst einfach gestalten zu können, sind die Löcher der ersten Lochreihe auf einer ersten Geraden angeordnet und die Löcher der zweiten Lochreihe sind auf einer zweiten Geraden angeordnet. Die erste Gerade ist dabei vorzugsweise senkrecht zur zweiten Gerade.

Weiter bevorzugt sind die erste und zweite Referenzfläche neben den Lochreihen streifenförmig und parallel zu den Lochreihen angeordnet. Besonders bevorzugt sind die erste und zweite Referenzfläche dabei geschliffene oder gefräste Flächen. Weiter bevorzugt verlaufen die erste und zweite Referenzfläche parallel zum Rand der Basisplatte.

Die erste und zweite Lochreihe weisen besonders bevorzugt eine gleiche Lochzahl, einen gleichen Lochabstand und einen gleichen Lochdurchmesser auf.

Der Messkörper ist vorzugsweise aus Invar hergestellt. Invar weist einen sehr geringen Wärmeausdehnungskoeffizienten auf, und ist somit für die Herstellung des Messkörpers besonders gut geeignet. Weiter bevorzugt sind ein Dicke der ersten und zweiten Wand und eine Dicke der Basisplatte gleich.

Weiterhin betrifft die vorliegende Erfindung eine 3-achsige Werkzeugmaschine umfassend eine Werkzeugspindel, eine Messeinrichtung, insbesondere einen 3D-Messtaster, welcher in die Werkzeugspindel einspannbar ist und eine Steuerungseinheit zum Steuern der 3-achsigen Werkzeugmaschine. Weiterhin umfasst die 3-achsige Werkzeugmaschine einen erfindungsgemäßen Messkörper, wobei die Steuerungseinheit eingerichtet ist, basierend auf einem Soll-Ist-Vergleich von vorab bestimmten geometrischen Soll-Abmessungen des Messkörpers mit durch die Messeinrichtung in der 3-achsigen Werkzeugmaschine bestimmten geometrischen Ist-Abmessungen des Messkörpers eine Korrektur der geometrischen Daten der 3-achsigen Werkzeugmaschine vorzunehmen. Somit weist die Steuerungseinheit einen Speicher auf, in welchem die geometrischen Soll-Abmessungen des Messkörpers, welche in einem vorherigen Schritt in einer Messmaschine bestimmt wurden, abgespeichert sind. Zur Bestimmung der geometrischen Ist-Abmessung des Messkörpers in der 3-achsigen Werkzeugmaschine startet die Steuerungseinheit vorzugsweise ein NC-Programm zur Vermessung des Messkörpers, um die Ist-Werte des Messkörpers zu bestimmen. Durch einen Vergleich zwischen den Soll-Werten und den Ist-Werten kann somit eine Korrektur von geometrischen Daten der 3-achsigen Werkzeugmaschine vorgenommen werden, wodurch die Genauigkeit bei der Bearbeitung von Werkstücken durch die 3-achsige Werkzeugmaschine signifikant verbessert wird. Demnach kann auf einfache Weise eine Kompensation von Geometriefehlern der 3-achsigen Werkzeugmaschine erreicht werden. Die Soll-Werte sind vorzugsweise in einem Speicher gespeichert. Der Messkörper umfasst weiter bevorzugt eine Dreipunktauflage, mit der dieser auf den Maschinentisch gestellt oder gespannt wird. Das bedeutet, dass der Messkörper auf drei Füßen, die unterhalb der Basisplatte möglichst weit voneinander entfernt angeordnet sind, steht.

Weiterhin betrifft die vorliegende Erfindung ein Verfahren zur Überprüfung und Kompensation von geometrischen Abweichungen einer 3-achsigen Werkzeugmaschine, wobei das Verfahren die Schritte umfasst:
- Einspannen einer Messeinrichtung, insbesondere eines 3D-Messtasters, in eine Spindel der 3-achsigen Werkzeugmaschine,
- Anordnen eines Messkörpers in einem Arbeitsraum der 3-achsigen Werkzeugmaschine,
- Anfahren einer Vielzahl von verschiedenen Positionen des Messkörpers durch die Messeinrichtung, um geometrische Ist-Daten am Messkörper zu erfassen,
- Durchführen eines Soll-Ist-Vergleichs zwischen den erfassten Ist-Daten mit vorabbestimmten Soll-Daten des Messkörpers zur Bestimmung von geometrischen Abweichungen und
- Kompensieren der geometrischen Abweichungen der 3-achsigen Werkzeugmaschine in einer Steuerungseinheit der 3-achsigen Werkzeugmaschine, um eine Arbeitsgenauigkeit der 3-achsigen Werkzeugmaschine zu erhöhen.

Das erfindungsgemäße Verfahren kann dabei relativ schnell und sicher ausgeführt werden. Insbesondere kann das erfindungsgemäße Verfahren auch nach einer Lieferung einer 3-achsigen Werkzeugmaschine bei einem Kunden in kurzer Zeit durchgeführt werden, sodass auch dort herrschende Bedingungen, insbesondere Temperaturbedingungen beim Kunden, keine negativen Einflüsse auf die geometrische Genauigkeit der 3-achsigen Werkzeugmaschine im Betrieb mehr haben.

Selbstverständlich ist es auch möglich, dass das Verfahren beim Hersteller der 3-achsigen Werkzeugmaschine durchgeführt wird, um gegebenenfalls Fertigungsprozesse beim Hersteller der 3-achsigen Werkzeugmaschine zu optimieren.

Vorzugsweise werden die Soll-Werte des Messkörpers vorab in einer Koordinatenmessmaschine ermittelt und der Messkörper dann derart im Arbeitsraum der 3-achsigen Werkzeugmaschine angeordnet, dass ein Koordinatensystem des Messkörpers mit einem Koordinatensystem der 3-achsigen Werkzeugmaschine übereinstimmt.

Weiter bevorzugt wird bei der Vermessung des Messkörpers in der 3-achsigen Werkzeugmaschine eine Temperatur des Arbeitsraums erfasst und eine Korrektur der Ist-Daten basierend auf der erfassten Temperatur des Arbeitsraums durchgeführt. Hierdurch wird die Genauigkeit für die Kompensation von geometrischen Abweichungen weiter verbessert.

Das erfindungsgemäße Verfahren bestimmt vorzugsweise in X-Richtung, Y-Richtung und Z-Richtung jeweils Positionsabweichungen der jeweiligen Achsen und ferner zwei Geradheitsabweichungen der jeweiligen Achsen. Dadurch können insgesamt neun verschiedene geometrische Fehlerquellen erfasst werden.

Weiter bevorzugt werden Rechtwinkligkeitsfehler jeweils zwischen den drei Achsen d.h. der X-Achse, der Y-Achse und Z-Achse, berechnet, wodurch die Genauigkeit zur Kompensation geometrischer Abweichungen weiter verbessert wird und insgesamt zwölf geometrische Abweichungen erfassbar sind.

Nachfolgend wird ein bevorzugtes Ausführungsbeispiel der Erfindung unter Bezugnahme von den begleitenden Zeichnungen beschrieben. In der Zeichnung ist:
- Fig. 1: eine schematische, perspektivische Ansicht eines Messkörpers in einer 3-achsigen Werkzeugmaschine gemäß einem bevorzugten Ausführungsbeispiel der Erfindung,
- Fig. 2: eine schematische, perspektivische Ansicht des Messkörpers von Figur 1 aus einer anderen Perspektive,
- Fig. 3: eine schematische Draufsicht des Messkörpers von Figur 2 und
- Fig. 4: eine schematische, perspektivische Gesamtansicht der 3-achsigen Werkzeugmaschine von Figur 1.

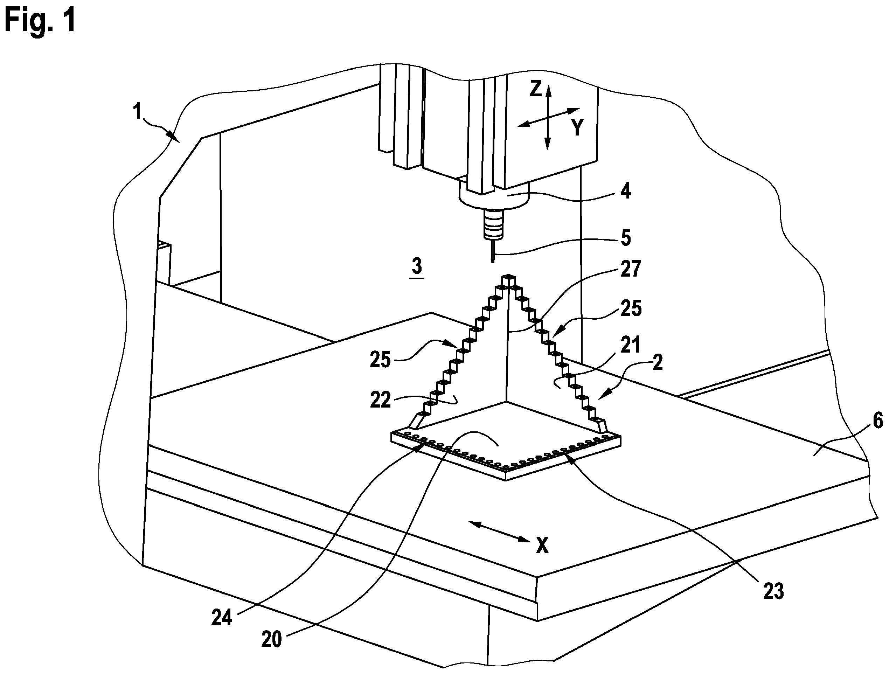

Nachfolgend wird unter Bezugnahme auf die Figuren 1 bis 4 eine 3-achsige Werkzeugmaschine 1 mit einem Messkörper 2 zur Überprüfung von geometrischen Abweichungen der 3-achsigen Werkzeugmaschine im Detail beschrieben.

Ferner wird unter Bezugnahme auf die Figuren 1 bis 4 auch ein Verfahren zur Überprüfung und Kompensation von geometrischen Abweichungen einer 3-achsigen Werkzeugmaschine beschrieben.

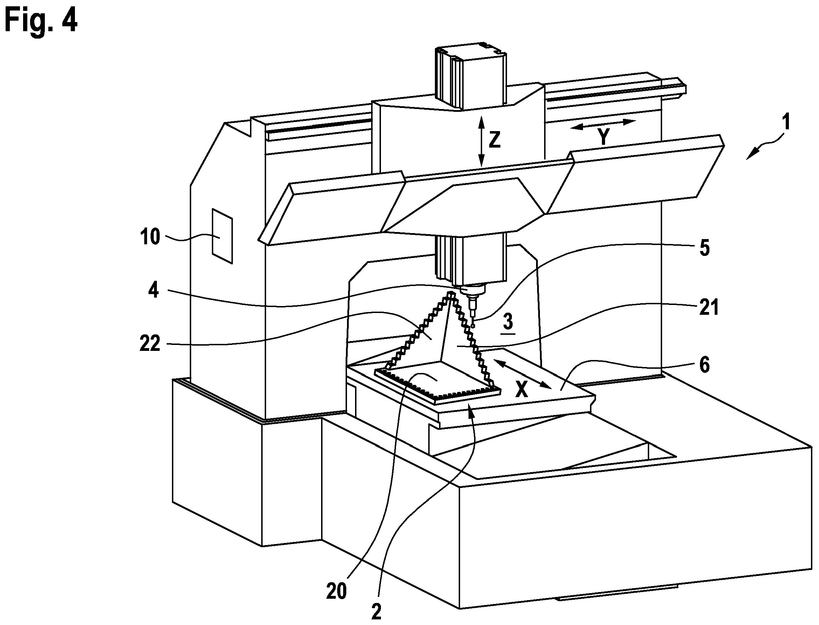

Wie aus den Figuren 1 und 4 ersichtlich ist, umfasst die 3-achsige Werkzeugmaschine 1 einen Arbeitsraum 3, eine Spindel 4 und eine Steuerungseinheit 10.

Wie aus Figur 1 und Figur 4 ersichtlich ist, ist ein Messkörper 2 auf einem Maschinentisch 6 der 3-achsigen Werkzeugmaschine 1 angeordnet.

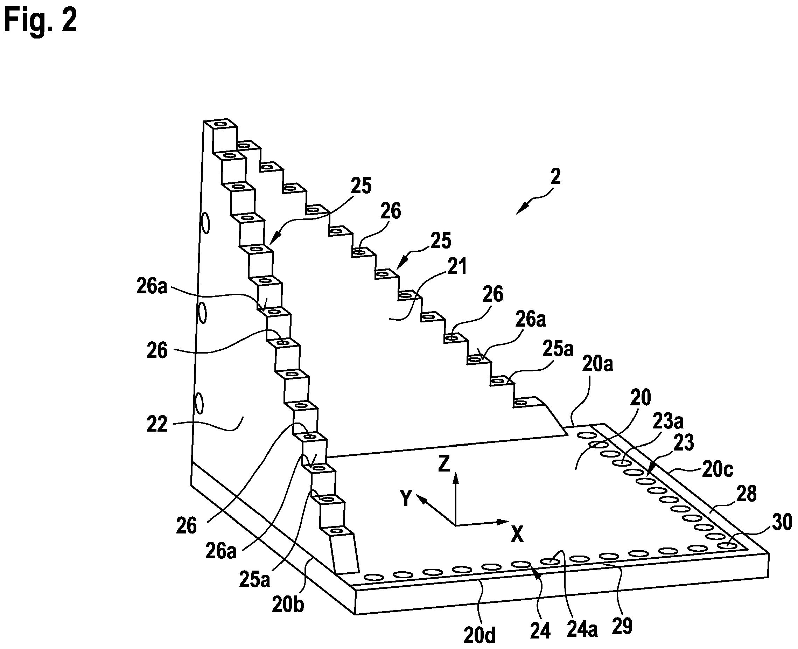

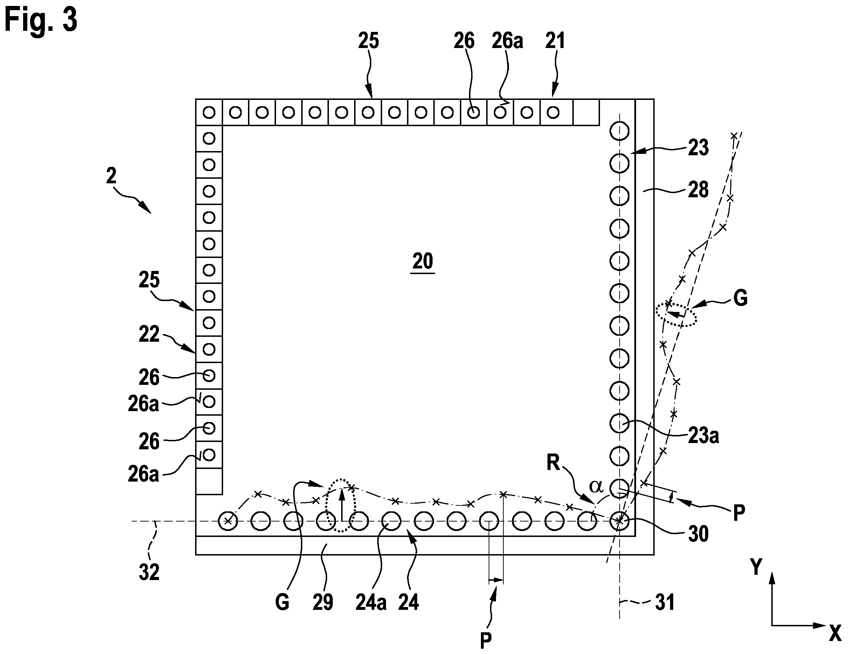

Der Messkörper 2 ist im Detail aus den Figuren 2 und 3 ersichtlich. Der Messkörper 2 ist eingerichtet zur Überprüfung von geometrischen Abweichungen der 3-achsigen Werkzeugmaschine. Insbesondere können mittels des Messkörpers 2 sehr genau Koordinaten zur Positionierung eines Werkzeugs der 3-achsigen Werkzeugmaschine 1 bestimmt werden.

Der Messkörper 2 umfasst eine ebene Basisplatte 20, welche in einer X-Richtung und einer Y-Richtung eine Grundebene aufspannt. Ferner umfasst der Messkörper 2 eine erste Wand 21 und eine zweite Wand 22. Die erste Wand 21 und die zweite Wand 22 sind an der Basisplatte 20 angeordnet und stehen senkrecht von der Basisplatte 20 vor.

Wie aus Figur 2 ersichtlich ist, sind dabei die erste Wand 21 und die zweite Wand 22 auf der Grundfläche der Basisplatte 20 angeordnet.

Die erste Wand 21 und die zweite Wand 22 sind dabei entlang von Rändern der Basisplatte 20 angeordnet. Genauer ist die erste Wand 21 entlang eines ersten Randes 20a der Basisplatte 20 angeordnet und die zweite Wand 22 ist entlang eines zweiten Randes 20b der Basisplatte 20.

Die erste und zweite Wand 21, 22 sind dabei derart an der Basisplatte 20 angeordnet, dass sich die erste und zweite Wand an einer Ecke der Basisplatte berühren. Dadurch entsteht eine Ecklinie 27 (vgl. Figur 1), welche senkrecht zur Grundfläche der Basisplatte 20 ist.

Wie aus den Figuren 1 und 2 ersichtlich ist, sind die erste Wand 21 und die zweite Wand 22 dreieckförmig ausgebildet, wobei an einem oberen freien Ende der ersten und zweiten Wand jeweils Treppenstufen ausgebildet sind. Somit entsteht ein Stufendreieck, wobei an jeder Wand ein treppenstufenförmiger Bereich 25 freiliegt. Wie aus Figur 2 ersichtlich ist, weist jede Stufe 25a ein Referenzloch 26 und eine geschliffene oder gefräste Stufenfläche 26a auf. Eine Dicke der ersten und zweiten Wand ist vorzugsweise gleich gewählt. Weiter bevorzugt ist auch eine Dicke der Basisplatte 20 gleich wie die Wanddicken der Wände 21, 22.

Weiterhin umfasst der Messkörper 2 in der Basisplatte 20 eine erste Lochreihe 23 und eine zweite Lochreihe 24. Die erste Lochreihe 23 umfasst eine Vielzahl von Löchern 23a, welche auf einer ersten Geraden 31 angeordnet sind. Die zweite Lochreihe 24 umfasst eine Vielzahl von zweiten Löchern 24a, welche auf einer zweiten Geraden 32 angeordnet sind. Dabei sind jeweils die Mittelpunkte der Löcher 23a, 24a auf den Geraden 31, 32 angeordnet. Die erste und zweite Gerade 31, 32 schneiden sich dabei in einem rechten Winkel.

Wie weiter aus Figur 2 ersichtlich ist, ist neben der ersten Lochreihe 23 eine erste streifenförmige Referenzfläche 28 angeordnet. Neben der zweiten Lochreihe 24 ist eine zweite streifenförmige Referenzfläche 29 angeordnet. Die Referenzflächen liegen dabei jeweils zwischen den Lochreihen und einem dritten Rand 20c beziehungsweise vierten Rand 20d (vgl. Figur 2).

Die Basisplatte 20 ist quadratisch, sodass die Anzahl der Löcher der ersten und zweiten Lochreihe 23, 24 gleich ist. In der Ecke, der der Ecke an denen sich die Wandbereiche berühren gegenüberliegt, ist ein gemeinsames Loch 30 beider Lochreihen vorgesehen.

Wie in Figur 2 gezeigt, ist eine Z-Richtung senkrecht zur X-Richtung und senkrecht zur Y-Richtung.

Der Messkörper 2 ist auf dem Maschinentisch 6 der 3-achsigen Werkzeugmaschine 1 fixiert. Weiterhin ist in der Spindel 4 ein 3D-Messtaster angeordnet, mittels welchem eine Bestimmung von Ist-Koordinaten der 3-achsigen Werkzeugmaschine mittels des Messkörpers 2 durchgeführt wird.

Die 3-achsige Werkzeugmaschine 1 umfasst ferner die Steuerungseinheit 10, welche eingerichtet ist, die 3-achsige Werkzeugmaschine zu steuern. Die Steuerungseinheit 10 ist ferner eingerichtet, basierend auf einem Soll-Ist-Vergleich der geometrischen Abmessungen des Messkörpers 2 eine Korrektur der geometrischen Daten der 3-achsigen Werkzeugmaschine 1 vorzunehmen.

Die 3-achsige Werkzeugmaschine weist, wie voranstehend schon erläutert, drei Linearachsen auf, nämlich eine erste Achse in X-Richtung eine zweite Achse in Y-Richtung und eine dritte Achse in Z-Richtung.

Insgesamt ergeben sich durch die drei Linearachsen einundzwanzig Abweichungen, wobei davon drei Rechtwinkligkeitsabweichungen der Linearachsen zueinander sind. Somit ergeben sich für die 3-achsige Werkzeugmaschine insgesamt einundzwanzig Fehlerparameter.

Mittels des erfindungsgemäßen Verfahrens kann somit eine Überprüfung und Korrektur von Positionsabweichungen, von Geradheitsabweichungen und Rechtwinkligkeitsabweichungen der 3-achsigen Werkzeugmaschine, wie in Figur 4 dargestellt, welche eine Portalmaschine ist, ausgeführt werden.

Hierzu muss zuerst der Messkörper 2 mittels einer nicht gezeigten Koordinatenmessmaschine vermessen werden, um Soll-Werte zu erzeugen. Diese Soll-Werte werden dann der Steuerungseinheit 10 der 3-achsigen Werkzeugmaschine 1 zugeführt und in einem Speicher gespeichert. Zur Vermessung des Messkörpers 2 wird dabei ein Koordinatensystem derart aufgespannt, dass eine X-Y-Ebene parallel zur Basisplatte 20 ist. Anhand von mehrfach bestimmten Z-Positionen, X-Positionen und Y-Positionen von verschiedenen Referenzelementen des Messkörpers 2 wird somit die Geometrie des Messkörpers 2, welcher vorzugsweise aus Invar hergestellt ist, ermittelt. Gleichzeitig wird auch ein Nullpunkt des Koordinatensystems des Messkörpers 2 festgelegt. Als Referenzelemente dienen beispielsweise die geschliffenen Stufenflächen 26a und die ersten und zweiten Referenzflächen 28, 29 für die Z-Positionen. Die Bohrungen der Lochreihen 23, 24 sowie die Bohrungen 26 in den Stufen dienen als Referenzelemente für die X-Positionen und Y-Positionen.

Um nun die geometrischen Abweichungen der 3-achsigen Werkzeugmaschine zu erfassen, wird der Messkörper 2 auf den Maschinentisch 6 in den Arbeitsraum 3 der 3-achsigen Werkzeugmaschine eingebracht. Dabei kann der Messkörper 2 eingespannt werden oder auf andere Weise auf einem Maschinentisch befestigt werden. Dabei sollte das X-Y-Z-Koordinatensystem des Messkörpers grundsätzlich parallel zum X-Y-Z-Koordinatensystem der 3-achsigen Werkzeugmaschine ausgerichtet sein. Die Vermessung des Messkörpers 2 in der 3-achsigen Werkzeugmaschine 1 wird dann mittels der 3-D-Messeinrichtung 5, z.B. einem 3D-Messtaster, durchgeführt. Üblicherweise verfügen moderne 3-achsige Werkzeugmaschinen über einen derartigen 3D-Messtaster beispielsweise zur Erfassung von Bauteilpositionen und Bauteilgeometrien.

Vor der Vermessung ist somit das Koordinatensystem der 3-achsigen Werkzeugmaschine identisch mit dem Koordinatensystem der Koordinatenmessmaschine ausgerichtet, in welcher der Messkörper 2 zuvor vermessen wurde.

Nachdem der Messkörper 2 im Arbeitsraum 3 der 3-achsigen Werkzeugmaschine fixiert ist, kann die Steuerungseinheit 10 vorzugsweise ein vollautomatisch ablaufendes NC-Programm ablaufen lassen, um mittels des 3D-Messtasters 5 den Messkörper 2 zu vermessen und dadurch die Ist-Werte der 3-achsigen Werkzeugmaschine 1 zu bestimmen.

Vorzugsweise wird bei der Vermessung des Messkörpers 2 im Arbeitsraum der 3-achsigen Werkzeugmaschine 1 auch die Temperatur des Arbeitsraums 3 der 3-achsigen Werkzeugmaschine 1 erfasst und gespeichert. Sollte sich diese Temperatur des Arbeitsraums von einer Referenztemperatur, z.B. 20 °C, unterscheiden, muss ein thermischer Ausdehnungskoeffizient der auf der 3-achsigen Werkzeugmaschine zu bearbeitenden Werkstücke bei der Werkstückbearbeitung berücksichtigt werden. Hier muss dann eine entsprechende Korrektur der Ist-Werte der 3-achsigen Werkzeugmaschine vorgenommen werden.

Nach Abschluss der Vermessung des Messkörpers 2 in der 3-achsigen Werkzeugmaschine 1 und gegebenenfalls einer thermischen Anpassung der Ist-Werte sind die Ist-Werte der 3-achsigen Werkzeugmaschine ermittelt und können mit den Soll-Werten des Messkörpers verglichen werden. Durch den Vergleich der Soll-Ist-Werte können so die geometrischen Abweichungen der 3-achsigen Werkzeugmaschine in Form von Positionsabweichungen, Geradheitsabweichungen und Rechtwinkligkeitsabweichungen berechnet und somit überprüft sowie korrigiert werden. Figur 3 zeigt dabei in Draufsicht auf den Messkörper 2 beispielhaft Geradheitsabweichungen G, eine Rechtwinkligkeitsabweichung R und Positionsabweichungen P.

Beispielsweise kann zuerst eine Positionsabweichung der X-Achse ermittelt werden, indem die Differenzen von Ist-Positionen und Soll-Positionen in X-Richtung der gemessenen Referenzelemente auf der Basisplatte 20 entlang der X-Achse ausgewertet werden. Da der Nullpunkt des Messkörpers 2 und die Position der Referenzelemente relativ zum Nullpunkt bekannt sind, können die ermittelten Differenzen X-Achsen-Positionen der 3-achsigen Werkzeugmaschine zugeordnet werden. Somit ergibt sich eine Tabelle aus X-Achsen-Positionen der 3-achsigen Werkzeugmaschine und Positionsabweichungen in X-Richtung an diesen X-Achsen-Positionen. Diese Positionsabweichungen können dabei direkt als Korrekturdaten für eine Fehlerkompensation der 3-achsigen Werkzeugmaschine in der Steuerungseinheit 10 gespeichert und verwendet werden.

Alternativ könnten die Abweichungen auch mathematisch vorverarbeitet werden. So können die Abweichungen beispielsweise auch mit verschiedenen mathematischen Funktionen approximiert werden. Gerade bei kleinen Messkörpern 2 mit wenigen Referenzelementen ist beispielsweise eine Approximation der Differenzen mit einer Geraden (Ausgleichsgerade) denkbar. In diesem Fall wird lediglich ein Skalierungsfehler korrigiert.

Da der Messkörper 2 nur einen Teil des Arbeitsraums 3 der 3-achsigen Werkzeugmaschine abdeckt, werden die erfassten Ist-Werte vorzugsweise mittels einer entsprechend mathematischen Funktion extrapoliert. Dadurch werden Abweichungen für den gesamten Arbeitsraum 3 der 3-achsigen Werkzeugmaschine 1 erhalten.

In gleicher Weise werden Geradheitsabweichungen G der X-Achse bestimmt. Hierbei werden die Positionsabweichungen P in Y-Richtung beziehungsweise Z-Richtung den X-Achsen-Positionen zugeordnet. Die Differenzen zwischen Ist-Position und Soll-Positionen in Y-Richtung ergeben sich dabei aus den ermittelten Mittelpunkten der Löcher der Lochreihen 23, 24 und der Referenzlöcher 26 auf dem treppenstufigen Bereich 25. Die Differenzen zwischen Ist-Positionen und Soll-Positionen in Z-Richtung ergeben sich aus den Referenzflächen 28, 29 auf der Basisplatte 20 und den geschliffenen Stufenflächen 26a. Auch hierbei ist eine mathematische Vorverarbeitung beziehungsweise Approximation möglich.

Wenn die Korrekturdaten für die Positionsabweichung und Geradheitsabweichung der X-Achse berechnet wurden, werden alle Messdaten der Ist-Positionen der Referenzelemente für die weitere Auswertung anhand der Korrekturdaten für Positionsabweichung der X-Achse, die Geradheitsabweichung der X-Achse in Y-Richtung und die Geradheitsabweichung der X-Achse in Z-Richtung angepasst. Es wird an dieser Stelle bevorzugt davon ausgegangen, dass die angepassten Ist-Position keine Fehler mehr in X-Richtung aufweisen. Dadurch können in der weiteren Auswertung die Fehler in Z-Richtung berechnet werden, ohne dass diese Z-Fehler von den Fehlern in X-Richtung beeinflusst werden. Denn bei der in X-Richtung angeordneten Wand 21 muss die X-Achse verfahren werden, damit die Referenzlöcher 26 auf unterschiedlichen Z-Achsen-Positionen gemessen werden können.

In einem nächsten Schritt kann ein Rechtwinkligkeitsfehler R zwischen der X-Achse und der Y-Achse berechnet werden. Hierzu werden zwei Ausgleichsgeraden berechnet. Die erste Ausgleichsgerade ergibt sich aus den X-Achsen-Position der Referenzelemente auf der Basisplatte 2 entlang der X-Richtung und deren Positionsabweichungen in Y-Richtung. Die zweite Ausgleichsgerade ergibt sich aus den Y-Achsen-Positionen der Referenzelemente auf der Basisplatte 2 entlang der Y-Richtung und deren Positionsabweichungen in X-Richtung. Anschließend wird ein Winkel α zwischen den beiden Ausgleichsgeraden berechnet (vgl. Figur 3). Die ermittelte Abweichung kann dabei direkt als Korrekturwert für eine Fehlerkompensation in der Steuerungseinheit 10 benutzt werden.

Anschließend werden die Ist-Positionen aller Referenzelemente in den Messdaten gemäß ihrer Y-Position anhand des Rechtwinkligkeitsfehlers so angepasst, dass die Messdaten keinen X-Y-Rechtwinkligkeitsfehler mehr enthalten.

Anschließend werden die Positionsabweichungen und die Geradheitsabweichungen der Y-Achse in gleicher Weise wie bei der X-Achse berechnet. Hierfür werden die Differenzen bei der Ist- und Soll-Position der Referenzpositionen auf der Basisplatte 2 entlang der Y-Achse ausgewertet (vgl. Figur 3). Zusammen mit dem Nullpunkt ergibt sich eine Tabelle mit den Y-Achsen-Positionen der 3-achsigen Werkzeugmaschine und den Positionsabweichungen in X, Y und Z-Richtung an diesen Y-Achsenpositionen. Die Daten können wie bei der X-Achse weiterverarbeitet werden oder direkt als Korrekturdaten für eine Fehlerkompensation der 3-achsigen Werkzeugmaschine in die Steuerungseinheit 10 übernommen werden. Auch hier sollten die Korrekturdaten mit einer entsprechenden mathematischen Funktion extrapoliert werden, um den gesamten Arbeitsraum 3 zu definieren.

Anschließend werden alle Ist-Positionen der Referenzelemente für die weitere Auswertung anhand der Korrekturdaten für die Positionsabweichung und die zwei Geradheitsabweichungen der Y-Achse angepasst. Es wird an dieser Stelle bevorzugt davon ausgegangen, dass die angepassten Ist-Positionen keine Fehler mehr in Y-Richtung aufweisen. Dadurch können in der weiteren Auswertung die Fehler in Z-Richtung berechnet werden, ohne dass diese Fehler von den Fehlern in Y-Richtung beeinflusst werden. Denn bei der in Y-Richtung angeordneten zweiten Wand 22 muss die Y-Achse verfahren werden, damit die Bohrungen 26 auf unterschiedlichen Z-Achsen-Positionen gemessen werden können.

In einem nächsten Schritt werden die Rechtwinkligkeiten zwischen der X-Achse und der Z-Achse berechnet. Hierzu werden zwei Ausgleichsgeraden berechnet. Die erste Ausgleichsgerade ergibt sich aus den X-Achsen-Positionen der Referenzelemente auf der Basisplatte 2 entlang der X-Richtung und deren Positionsabweichungen in Z-Richtung. Die zweite Ausgleichsgerade ergibt sich aus dem Z-Achsen-Position der Referenzelemente auf der erste Wand 21 (Stufendreieck) in X-Richtung und deren Positionsabweichungen in X-Richtung. Anschließend wird der Winkel α zwischen den beiden Ausgleichsgeraden berechnet. Die ermittelte Abweichung kann direkt als Korrekturwert für eine Fehlerkompensation in der Steuerungseinheit 10 benutzt werden.

In gleicher Weise wird die Rechtwinkligkeit zwischen der Y-Achse und der Z-Achse berechnet. Die erste Ausgleichsgerade ergibt sich dabei aus den Y-Achsen-Positionen der Referenzelemente auf der Basisplatte 20 entlang der Y-Richtung und deren Positionsabweichungen in Z-Richtung. Die zweite Ausgleichsgerade ergibt sich aus den Z-Achsen-Positionen der Referenzelemente auf der zweiten Wand 22 in Y-Richtung und deren Positionsabweichungen in Y-Richtung. Die Abweichungen der Rechtwinkligkeit zwischen diesen beiden Geraden kann wiederum direkt als Korrekturwert für eine Fehlerkompensation benutzt werden.

Die Ist-Position aller Referenzelemente werden in den Messdaten anschließend gemäß Ihrer Z-Position anhand der Rechtwinkligkeitsfehler so angepasst, dass die Messdaten keinen X-Z-Rechtwinkligkeitsfehler und keinen Y-Z-Rechtwinkligkeitsfehler mehr enthalten.

Im letzten Schritt werden die geometrischen Abweichungen der Z-Achse berechnet. Hierzu werden die Referenzelemente (Referenzlöcher 26 und geschliffene Stufenflächen 26a) der beiden dreieckförmigen Wände 21, 22 verwendet. Da in der vorhergehenden Auswertung die Fehler der X-Achse und Y-Achse sowie die drei Rechtwinkligkeitsfehler bereits aus den Messdaten herausgerechnet wurden, wird in diesem Schritt davon ausgegangen, dass ein Verfahren in X-Richtung oder Y-Richtung, das zum Messen der Stufen notwendig ist, die geometrischen Abweichungen der Z-Achse nicht beeinflusst.

Somit wird die Positionsabweichung der Z-Achse ermittelt, indem die Differenzen der Ist-Position und Soll-Position der Referenzposition in Z-Richtung auf beiden Wänden 21, 22 ausgewertet werden. Da der Nullpunkt des Messkörpers 2 sowie die Position der Referenzelemente relativ zum Nullpunkt bekannt sind, können die ermittelten Differenzen Z-Achsen-Positionen der 3-achsigen Werkzeugmaschine zugeordnet werden. Es ergibt sich so eine Tabelle aus Z-Achsen-Positionen, welche so direkt als Korrekturdaten für eine Fehlerkompensation der 3-achsigen Werkzeugmaschine verwendet werden können. Die Daten können wie bei der X-Achse und der Y-Achse weiterverarbeitet werden oder direkt als Korrekturdaten verwendet werden. Auch hier können die Korrekturdaten mit einer entsprechenden mathematischen Funktion extrapoliert werden.

Wie bei den anderen Achsen werden in gleicher Weise die Geradheitsabweichungen der Z-Achse bestimmt. Hierbei werden die Positionsabweichungen in Y-Richtung beziehungsweise X-Richtung den Z-Achsen-Positionen zugeordnet. Die Differenzen zwischen Ist-Position und Soll-Position ergeben sich dabei aus den ermittelten Mittelpunkten der Löcher. Die weitere Verarbeitung der Geradheitsabweichungen kann identisch zur Positionsabweichung der Z-Achse erfolgen.

Auf diese Weise können alle geometrischen Fehler außer Gieren, Nicken und Rollen mithilfe des Messkörpers 2 überprüft und korrigiert werden. Das Verfahren bietet sich insbesondere für die Korrektur einer 3-achsigen Werkzeugmaschinengeometrie nach Änderung der thermischen Bedingungen an, da in diesem Fall in der Regel lineare Fehler auftreten, die sich gut extrapolieren lassen. Zusätzlich kann dieses Verfahren auch dazu genutzt werden, um die Geometrie der 3-achsigen Werkzeugmaschine an Werkstoffe mit unterschiedlichen thermischen Ausdehnungskoeffizienten anzupassen, falls im Arbeitsraum eine von der Referenztemperatur abweichende Temperatur herrscht.

Neben der vorstehenden schriftlichen Beschreibung der Erfindung wird zu deren ergänzender Offenbarung hiermit explizit auf die zeichnerische Darstellung der Erfindung in den Fig. 1 bis 4 Bezug genommen.

### Bezugszeichenliste

- 1: 3-achsige Werkzeugmaschine
- 2: Messkörper
- 3: Arbeitsraum
- 4: Spindel
- 5: Messeinrichtung (3D-Messtaster)
- 6: Maschinentisch
- 10: Steuerungseinheit
- 20: Basisplatte
- 20a: erster Rand
- 20b: zweiter Rand
- 20c: dritter Rand
- 20d: vierter Rand
- 21: erste Wand
- 22: zweite Wand
- 23: erste Lochreihe
- 23a: Löcher der ersten Lochreihe
- 24: zweite Lochreihe
- 24a: Löcher der zweiten Lochreihe
- 25: treppenstufenförmiger Bereich
- 25a: Stufen
- 26: Referenzloch
- 26a: geschliffene Stufenfläche
- 27: Eckenlinie
- 28: erste Referenzfläche
- 29: zweite Referenzfläche
- 30: gemeinsames Loch
- 31: erste Gerade
- 32: zweite Gerade
- G: Geradheitsabweichung
- R: Rechtwinkligkeit
- P: Positionsabweichung
- X: X-Achse
- Y: Y-Achse
- Z: Z-Achse

## Patentansprüche

1. Messkörper zur Überprüfung von geometrischen Abweichungen in einer 3-achsigen Werkzeugmaschine (1) umfassend:
• eine viereckige Basisplatte (20),
• eine erste Wand (21), welche an der Basisplatte (20) angeordnet ist und senkrecht von der Basisplatte (20) vorsteht,
• eine zweite Wand (22), welche an der Basisplatte (20) angeordnet ist und senkrecht von der Basisplatte (20) vorsteht,
• wobei in der Basisplatte (20) eine erste Lochreihe (23) und eine zweite Lochreihe (24) ausgebildet ist,
• wobei die erste Wand (21) an einem oberen, freiliegenden Bereich einen treppenstufenförmigen Bereich (25) mit einer Vielzahl von Stufen (25a) aufweist,
• wobei die zweite Wand (22) an einem oberen, freiliegenden Bereich einen treppenstufenförmigen Bereich (25) mit einer Vielzahl von Stufen (25a) aufweist,
• wobei die erste Wand (21) entlang eines ersten Randes (20a) der Basisplatte (20) angeordnet ist und wobei die zweite Wand (22) entlang eines zweiten Randes (20b) der Basisplatte (20) angeordnet ist, wobei die erste Lochreihe (23) entlang eines dritten Randes (20c) der Basisplatte (20) angeordnet ist und wobei die zweite Lochreihe (24) entlang eines vierten Randes (20d) der Basisplatte (20) angeordnet ist,
• wobei die erste Wand (21) und die zweite Wand (22) an einer Ecke der Basisplatte (20) aneinander angrenzen, und
• wobei jede Stufe ein Referenzloch (26) aufweist.

2. Messkörper nach einem der vorherigen Ansprüche, wobei die Stufen (25a) der ersten Wand (21) und der zweiten Wand (22) gleiche Stufenhöhen und/oder gleiche Stufenlängen und/oder gleiche Stufenanzahl aufweisen.

3. Messkörper nach einem der vorherigen Ansprüche, wobei jede Stufe (25a) eine geschliffene oder gefräste Stufenfläche (26a) aufweist.

4. Messkörper nach einem der vorherigen Ansprüche, wobei benachbart zur ersten Lochreihe (23) eine erste Referenzfläche (28) als Referenz für eine Z-Richtung angeordnet ist und benachbart zur zweiten Lochreihe (24) eine zweite Referenzfläche (29) als Referenz für die Z-Richtung angeordnet ist, wobei die Z-Richtung senkrecht zur Basisplatte (20) ist.

5. Messkörper nach einem der vorherigen Ansprüche, wobei die Löcher der ersten Lochreihe (23) auf einer ersten Geraden (31) liegen und/oder wobei die Löcher der zweiten Lochreihe (24) auf einer zweiten Geraden (32) liegen.

6. Messkörper nach Anspruch 5, wobei die erste Referenzfläche (28) und die zweite Referenzfläche (29) streifenförmig und parallel zur ersten Lochreihe (23) und zur zweiten Lochreihe (24) angeordnet sind.

7. 3-achsige Werkzeugmaschine umfassend eine Werkzeugspindel (4)
- ein Messkörper (2) nach einem der vorherigen Ansprüche,
- eine Messeinrichtung (5), welche in die Werkzeugspindel (4) einspannbar ist, und eingerichtet ist, Ist-Werte des in der 3-achsigen Werkzeugmaschine (1) fixierten Messkörpers (2) zu erfassen, und
- eine Steuerungseinheit (10), eingerichtet zur Steuerung der 3-achsigen Werkzeugmaschine (1),
wobei die Steuerungseinheit (10) ferner eingerichtet ist, basierend auf den geometrischen Soll-Werten der Abmessungen des Messkörpers (2) und den für die 3-achsige Werkzeugmaschine (1) mittels der Messeinrichtung (5) ermittelten Ist-Werten des in der 3-achsigen Werkzeugmaschine (1) fixierten Messkörpers (2) einen Soll-Ist-Vergleich auszuführen und bei Auftreten von Abweichungen zwischen den Soll-Werten und den Ist-Werten eine Korrektur von geometrischen Daten der 3-achsigen Werkzeugmaschine (1) im Steuerungsprogramm der Steuerungseinheit (10) vorzunehmen.

8. 3-achsige Werkzeugmaschine nach Anspruch 7, wobei die Steuerungseinheit einen Speicher aufweist, in welchem die Soll-Werte des Messkörpers (2) gespeichert sind.

9. Verfahren zur Überprüfung und Kompensation von geometrischen Abweichungen einer 3-achsigen Werkzeugmaschine umfassend die Schritte:
- Einspannen einer Messeinrichtung (5) in eine Werkzeugspindel (4) der 3-achsigen Werkzeugmaschine,
- Anordnen eines Messkörpers (2) nach einem der Ansprüche 1 bis 6 in einem Arbeitsraum (3) der 3-achsigen Werkzeugmaschine,
- Anfahren einer Vielzahl von Positionen des Messkörpers (2), um geometrische Ist-Daten der 3-achsigen Werkzeugmaschine mittels des Messkörpers (2) zu erfassen,
- Durchführen eines Soll-Ist-Vergleichs der geometrischen Ist-Daten mit den gespeicherten Soll-Daten des Messkörpers (2) zur Bestimmung von geometrischen Abweichungen und
- Kompensieren der geometrischen Abweichungen in einer Steuerungseinheit (10) der 3-achsigen Werkzeugmaschine.

10. Verfahren nach Anspruch 9, wobei die Soll-Werte des Messkörpers (2) vorab in einer Koordinatenmessmaschine ermittelt wurden und der Messkörper (2) derart im Arbeitsraum (3) der 3-achsigen Werkzeugmaschine angeordnet wird, dass das Koordinatensystem des Messkörpers (2) mit dem Koordinatensystem der 3-achsigen Werkzeugmaschine übereinstimmen.

11. Verfahren nach Anspruch 9 oder 10, wobei bei der Vermessung des Messkörpers (2) in der 3-achsigen Werkzeugmaschine (1) eine Temperatur des Arbeitsraums (3) erfasst wird und eine Korrektur der Ist-Daten basierend auf der erfassten Temperatur des Arbeitsraums (3) durchgeführt wird.

12. Verfahren nach einem der Ansprüche 9 bis 11, wobei in X-Richtung, Y-Richtung und Z-Richtung jeweils Positionsabweichungen der jeweiligen Achsen und zwei Geradheitsabweichungen der jeweiligen Achsen bestimmt werden.

13. Verfahren nach einem der Ansprüche 9 bis 12, wobei Rechtwinkligkeitsfehler zwischen X-Achse, der Y-Achse und der Z-Achse berechnet werden.

## Claims

1. A measuring body for checking geometric deviations in a 3-axis machine tool (1) comprising:
▪a quadrangular base plate (20),
▪a first wall (21), which is arranged at the base plate (20) and protrudes perpendicularly from the base plate (20),
▪a second wall (22), which is arranged at the base plate (20) and protrudes perpendicularly from the base plate (20),
▪wherein a first hole row (23) and a second hole row (24) are formed in the base plate (20),
▪wherein the first wall (21) comprises a step-shaped portion (25) with a plurality of steps (25a) at an upper, exposed portion,
▪wherein the second wall (22) comprises a step-shaped portion (25) with a plurality of steps (25a) at an upper, exposed portion,
▪wherein the first wall (21) is arranged along a first edge (20a) of the base plate (20) and wherein the second wall (22) is arranged along a second edge (20b) of the base plate (20), wherein the first hole row (23) is arranged along a third edge (20c) of the base plate (20) and wherein the second hole row (24) is arranged along a fourth edge (20d) of the base plate (20),
▪wherein the first wall (21) and the second wall (22) are adjacent to each other at a corner of the base plate (20), and
▪wherein each step comprises a reference hole (26).

2. The measuring body according to one of the previous claims, wherein the steps (25a) of the first wall (21) and the second wall (22) have equal step heights and/or equal step lengths and/or equal step numbers.

3. The measuring body according to one of the previous claims, wherein each step (25a) comprises a burnished or milled step surface (26a).

4. The measuring body according to one of the previous claims, wherein a first reference surface (28) is arranged adjacent to the first hole row (23) as a reference for a Z direction and a second reference surface (29) is arranged adjacent to the second hole row (24) as a reference for the Z direction, wherein the Z direction is perpendicular to the base plate (20).

5. The measuring body according to one of the previous claims, wherein the holes of the first hole row (23) lie on a first straight line (31) and/or wherein the holes of the second hole row (24) lie on a second straight line (32).

6. The measuring body according to claim 5, wherein the first reference surface (28) and the second reference surface (29) are strip-shaped and arranged parallel to the first hole row (23) and to the second hole row (24).

7. A 3-axis machine tool comprising a tool spindle (4)
- a measuring body (2) according to one of the previous claims,
- a measuring device (5), which is clampable into the tool spindle (4) and is arranged to detect actual values of the measuring body (2) fixed in the 3-axis machine tool (1), and
- a control unit (10) arranged to control the 3-axis machine tool (1),
wherein the control unit (10) is further arranged, based on the geometric target values of the dimensions of the measuring body (2) and the actual values of the measuring body (2) fixed in the 3-axis machine tool (1) detected by the measuring device (5) for the 3-axis machine tool (1), to perform a target-actual comparison, and, if deviations occur between the target values and the actual values, to correct geometric data of the 3-axis machine tool (1) in the control program of the control unit (10).

8. The 3-axis machine tool according to claim 7, wherein the control unit comprises a memory, in which the target values of the measuring body (2) are stored.

9. A method for checking and compensating of geometric deviations of a 3-axis machine tool, comprising the steps:
- clamping a measuring device (5) into a tool spindle (4) of the 3-axis machine tool,
- arranging a measuring body (2) according to one of claims 1 to 6 in a working space (3) of the 3-axis machine tool,
- approaching a plurality of positions of the measuring body (2) in order to detect geometric actual data of the 3-axis machine tool by means of the measuring body (2),
- performing a target-actual comparison of the geometric actual data with the stored target data of the measuring body (2) to determine geometric deviations, and
- compensating of the geometric deviations in a control unit (10) of the 3-axis machine tool.

10. The method according to claim 9, wherein the target values of the measuring body (2) were detected in advance in a coordinate measuring machine and the measuring body (2) is arranged in the working space (3) of the 3-axis machine tool in such a way that the coordinate system of the measuring body (2) coincides with the coordinate system of the 3-axis machine tool.

11. The method according to claim 9 or 10, wherein during the measurement of the measuring body (2) in the 3-axis machine tool (1), a temperature of the working space (3) is detected and a correction of the actual data is performed based on the detected temperature of the working space (3).

12. The method according to one of claims 9 to 11, wherein position deviations of the respective axes and two straightness deviations of the respective axes are determined in the X direction, Y direction, and Z direction, respectively.

13. The method according to one of claims 9 to 12, wherein perpendicularity errors between the X-axis, the Y-axis and the Z-axis are calculated.

## Revendications

1. Corps de mesure pour la vérification d'écarts géométriques dans une machine-outil à 3 axes (1) comprenant :
• une plaque de base carrée (20),
• une première paroi (21), qui est disposée sur la plaque de base (20) et fait saillie perpendiculairement de la plaque de base (20),
• une deuxième paroi (22), qui est disposée sur la plaque de base (20) et fait saillie perpendiculairement de la plaque de base (20),
• dans lequel une première rangée de trous (23) et une deuxième rangée de trous (24) sont réalisées dans la plaque de base (20),
• dans lequel la première paroi (21) présente une zone (25) en forme d'escalier avec une pluralité d'échelons (25a) sur une zone exposée supérieure,
• dans lequel la deuxième paroi (22) présente une zone (25) en forme d'escalier avec une pluralité d'échelons (25a) sur une zone exposée supérieure,
• dans lequel la première paroi (21) est disposée le long d'un premier bord (20a) de la plaque de base (20) et dans lequel la deuxième paroi (22) est disposée le long d'un deuxième bord (20b) de la plaque de base (20), dans lequel la première rangée de trous (23) est disposée le long d'un troisième bord (20c) de la plaque de base (20) et dans lequel la deuxième rangée de trous (24) est disposée le long d'un quatrième bord (20d) de la plaque de base (20),
• dans lequel la première paroi (21) et la deuxième paroi (22) sont adjacentes l'une à l'autre sur un coin de la plaque de base (20), et
• dans lequel chaque échelon présente un trou de référence (26).

2. Corps de mesure selon la revendication précédente, dans lequel les échelons (25a) de la première paroi (21) et de la deuxième paroi (22) présentent des hauteurs d'échelon identiques et/ou des longueurs d'échelon identiques et/ou un nombre d'échelons identiques.

3. Corps de mesure selon l'une quelconque des revendications précédentes, dans lequel chaque échelon (25a) présente une surface d'échelon (26a) rectifiée ou fraisée.

4. Corps de mesure selon l'une quelconque des revendications précédentes, dans lequel une première surface de référence (28) est disposée de manière adjacente à la première rangée de trous (23) comme référence pour une direction Z et une deuxième surface de référence (29) est disposée de manière adjacente à la deuxième rangée de trous (24) comme référence pour la direction Z, dans lequel la direction Z est perpendiculaire à la plaque de base (20).

5. Corps de mesure selon l'une quelconque des revendications précédentes, dans lequel les trous de la première rangée de trous (23) se trouvent sur une première ligne droite (31) et/ou dans lequel les trous de la deuxième rangée de trous (24) se trouvent sur une deuxième ligne droite (32).

6. Corps de mesure selon la revendication 5, dans lequel la première surface de référence (28) et la deuxième surface de référence (29) sont disposées en forme de bande et parallèlement à la première rangée de trous (23) et à la deuxième rangée de trous (24).

7. Machine-outil à 3 axes comprenant une broche porte-outil (4)
- un corps de mesure (2) selon l'une quelconque des revendications précédentes,
- un dispositif de mesure (5), qui peut être serré dans la broche porte-outil (4) et qui est configuré pour détecter des valeurs réelles du corps de mesure (2) fixé dans la machine-outil à 3 axes (1), et
- une unité de commande (10) configurée pour commander la machine-outil à 3 axes (1),
dans laquelle l'unité de commande (10) est en outre configurée pour effectuer, sur la base des valeurs théoriques géométriques des dimensions du corps de mesure (2) et des valeurs réelles déterminées pour la machine-outil à 3 axes (1) au moyen du dispositif de mesure (5) du corps de mesure (2) fixé dans la machine-outil à 3 axes (1), une comparaison théorique-réelle et, en cas d'apparition d'écarts entre les valeurs théoriques et les valeurs réelles, une correction de données géométriques de la machine-outil à 3 axes (1) dans le programme de commande de l'unité de commande (10).

8. Machine-outil à 3 axes selon la revendication 7, dans laquelle l'unité de commande présente une mémoire dans laquelle les valeurs théoriques du corps de mesure (2) sont mémorisées.

9. Procédé de vérification et de compensation d'écarts géométriques d'une machine-outil à 3 axes comprenant les étapes suivantes :
- de serrage d'un dispositif de mesure (5) dans une broche porte-outil (4) de la machine-outil 3 axes,
- de disposition d'un corps de mesure (2) selon l'une quelconque des revendications 1 à 6 dans un espace de travail (3) de la machine-outil à 3 axes,
- d'approche d'une pluralité de positions du corps de mesure (2) pour détecter des données géométriques réelles de la machine-outil à 3 axes au moyen du corps de mesure (2),
- de mise en œuvre d'une comparaison théorique-réelle des données géométriques réelles aux données théoriques mémorisées du corps de mesure (2) pour définir des écarts géométriques et
- de compensation des écarts géométriques dans une unité de commande (10) de la machine-outil 3 axes.

10. Procédé selon la revendication 9, dans lequel les valeurs théoriques du corps de mesure (2) ont été déterminées au préalable dans une machine de mesure de coordonnées et le corps de mesure (2) est disposé dans l'espace de travail (3) de la machine-outil à 3 axes de telle manière que le système de coordonnées du corps de mesure (2) coïncide avec le système de coordonnées de la machine-outil à 3 axes.

11. Procédé selon la revendication 9 ou 10, dans lequel, lors de la mesure du corps de mesure (2) dans la machine-outil à 3 axes (1), une température de l'espace de travail (3) est détectée et une correction des données réelles est mise en œuvre sur la base de la température détectée de l'espace de travail (3).

12. Procédé selon l'une quelconque des revendications 9 à 11, dans lequel des écarts de position des axes respectifs et deux écarts de rectitude des axes respectifs sont définis respectivement dans la direction X, la direction Y et la direction Z.

13. Procédé selon l'une quelconque des revendications 9 à 12, dans lequel les erreurs de perpendicularité entre l'axe X, l'axe Y et l'axe Z sont calculées.
